Europäisches Patentamt

European Patent Office

Office européen des brevets

(11) Veröffentlichungsnummer : **0 139 099**
**B1**

# (12) EUROPÄISCHE PATENTSCHRIFT

(45) Veröffentlichungstag der Patentschrift :
**17.05.89**

(21) Anmeldenummer : **84107994.0**

(22) Anmeldetag : **07.07.84**

(51) Int. Cl.⁴ : **B 29 C 45/80**

(54) **Formschliesseinheit einer Spritzgiessmaschine.**

(30) Priorität : **03.08.83 DE 3327935**

(43) Veröffentlichungstag der Anmeldung :
**02.05.85 Patentblatt 85/18**

(45) Bekanntmachung des Hinweises auf die Patenterteilung : **17.05.89 Patentblatt 89/20**

(84) Benannte Vertragsstaaten :
**AT CH FR GB IT LI NL**

(56) Entgegenhaltungen :
**US–A– 3 728 057**
**US–A– 4 005 974**
**US–A– 4 029 457**

(73) Patentinhaber : **KLÖCKNER-WERKE AKTIENGESELL-
SCHAFT**
**Klöcknerstrasse 29**
**D-4100 Duisburg 1 (DE)**

(72) Erfinder : **Gutjahr, Lothar**
**Junkerfeldele 1**
**D-7809 Denzlingen (DE)**

(74) Vertreter : **Kiefer, Winfried, Dipl.-Phys.**
**Klöckner-Werke Aktiengesellschaft Patentabteilung**
**Klöcknerstrasse 29**
**D-4100 Duisburg 1 (DE)**

EP 0 139 099 B1

## Beschreibung

Die Erfindung betrifft eine Formschließeinheit einer Spritzgießmaschine mit mindestens einem hydraulischen Fahrzylinder und mindestens einem Formzuhaltezylinder für die auf Holmen geführte verschiebbare Formaufspannplatte mit einem in der Zuflußleitung zum hydraulischen Fahrzylinder angeordneten Wegeventil, das zum Abfahren eines vorgegebenen Geschwindigkeitsverlaufs für die verschiebbare Formaufspannplatte steuerbar ist.

Beim Zufahren einer Spritzgießform aus ihrer geöffneten Endstellung, d. h. bei maximalem Plattenabstand, wird der Fahrzylinder mit maximalem Druck beaufschlagt, die verschiebbare Formaufspannplatte mit der auf ihr angeordneten einen Hälfte der Spritzgießform zunächst beschleunigt und dann so abgebremst, daß die Spritzgießform mit verringerter Geschwindigkeit geschlossen wird. Das Abbremsen der verschiebbaren Formaufspannplatte erfolgt in der Weise, daß die letzte Phase des Schließens der Spritzgießform unter der Kriechgeschwindigkeit erfolgt. Im allgemeinen ist man bestrebt, die Zeit für einen Spritzzyklus, d. h. die Zeit, die zum Herstellen eines Spritzteils benötigt wird, möglichst kurz zu halten. Dies bedeutet, daß die verschiebbare Formaufspannplatte bei maximaler Formöffnungsweite zunächst aus ihrer offenen Stellung möglichst schnell auf eine maximale Geschwindigkeit gebracht wird und das Abbremsen so kurzzeitig erfolgen soll, daß dieses Schliessen der Spritzgießform unter der Kriechgeschwindigkeit gerade noch möglich ist.

Das Abbremsen, insbesondere in der letzten Phase des Schließens, wird derart durchgeführt, daß es in Abhängigkeit der kinetischen Energie der verschiebbaren Formaufspannplatte und der aufgespannten Hälfte der Spritzgießform erfolgt. Da diese kinetische Energie abhängig ist von der Masse der verschiebbaren Formaufspannplatte und der aufgespannten Formhälfte, und die Masse der aufgespannten Formhälfte sich beim Wechsel der Spritzgießform im allgemeinen ändert, muß dieser Tatsache Rechnung getragen werden. Dies erfolgt in der Weise, daß die elektronische Schaltung entsprechend so ausgelegt ist, daß unter Berücksichtigung der in der Praxis aufzuspannenden Spritzgießformen gewissermaßen elektronisch eine Hüllkurve mit dieser quadratischen Verzögerung abgefahren wird, so daß stets auch nach einem Formwechsel ein Schließen unter der Kriechgeschwindigkeit sichergestellt ist. Der technische Aufwand für derartige Formschließeinheiten ist beachtlich, so daß sie im allgemeinen nur bei Spritzgießmaschinen zum Einsatz kommen.

Der Erfindung liegt die Aufgabe zugrunde, eine Formschließeinheit der eingangs erwähnten Art zu schaffen, die ebenfalls sicherstellt, daß die Schließstellung unter Kriechgeschwindigkeit erreicht wird, ohne daß einer eventuellen Änderung der kinetischen Energie Rechnung zu tragen ist.

Diese Aufgabe wird erfindungsgemäß dadurch gelöst, daß der Ventilkörper des 4/2-Wegeventil auf einer Spindel axial verschiebbar angeordnet ist, mit der Spindel ein Schrittmotor zum Abfahren eines vorgegebenen Geschwindigkeitsverlaufs gekoppelt ist und daß nach Erreichen eines vorgegebenen Abstandes zur feststehend angeordneten Formaufspannplatte durch die verschiebbare Formaufspannplatte der Schrittmotor auf eine höhere Schrittzahl umschaltbar ist. Durch diese Maßnahme wird erreicht, daß unabhängig von der Masse der aufgespannten Formhälfte exakt ein Geschwindigkeitsprofil für die verschiebbare Formaufspannplatte einschließlich der aufgespannten Formhälfte abgefahren wird und daß unabhängig von der jeweiligen Masse der aufgespannten Formhälfte die Form unter Einhaltung einer vorgegebenen Kriechgeschwindigkeit geschlossen wird. Beim Schließen der Form dreht der Schrittmotor die Spindel, wobei gleichzeitig der Ventilkörper des Wegeventils entsprechend verschoben wird und einen mehr oder weniger großen Durchflußquerschnitt für das hydraulische Arbeitsmittel frei gibt, so daß der Fahrzylinder entsprechend beaufschlagt wird und die verschiebbare Formaufspannplatte eine entsprechende Bewegung ausführt. Dies hat eine entsprechende gegenläufige Verschiebung des Ventilkörpers auf der Spindel zu Folge, dem wiederum durch den Schrittmotor entsprechend dem vorgegebenen Geschwindigkeitsverlauf entgegengewirkt wird. Es ist auf diese Weise eine hydraulisch starr zurückgekoppelte Regelstrecke gebildet, die zur Folge hat, daß mit beliebiger Genauigkeit, die im wesentlichen von der Genauigkeit der Spindel abhängt, die Bewegung der verschiebbaren Formaufspannplatte gesteuert wird.

Nach diesem Prinzip der hydraulich starren Rückkopplung arbeitende hydraulische Bauelemente sind an sich bereits bekannt (Prospekt der Fa. Hartmann und Lämmle AG, Elektrohydraulischer Linearverstärker LVS, Ausgabe 10, 1977). Derartige Bauelemente wurden bisher lediglich dazu verwendet, um z. B. an Werkzeugmaschinen verschiebbare Maschinenteile exakt zu positionieren.

Es ist auch bekannt (Prospekt der Firma Berger Lahr DIVI-STEP Typ SST 088/SST 093 den Schrittwinkel von Schrittmotoren umzuschalten, d. h. beispielsweise von 10 000 Schritten pro Umdrehung auf 1 000 pro Umdrehung herabzuschalten bzw. heraufzuschalten. Im allgemeinen sieht man es jedoch als einen Nachteil an, das Positionieren von Maschinenteilen mit hoher Schrittzahl durchzuführen, da zwar die Positioniergenauigkeit hierdurch heraufgesetzt werden kann, jedoch die Geschwindigkeit niedriger wird, wenn nicht ein sehr hoher Aufwand in der Elektronik für den Schrittmotor in Richtung hoher Frequenzen betrieben wird. Gerade von diesem Nachteil wird erfindungsgemäß Gebrauch gemacht, indem gewissermaßen nach Erreichen des Formschließsicherungspunktes ein Umschalten auf eine höhere Schrittzahl erfolgt, die aufgrund der ausgebildeten starren hydraulischen Regelstrecke gerade den Vorteil aufweist, daß hierdurch die verschiebbare Formaufspannplatte unabhängig von der jeweiligen Masse der aufgespannten Formhälfte gezwungen ist, unter einer vorgegebenen Schließgeschwindigkeit in die Schließstellung der Spritzgießform zu fahren. Erfindungswesentlich ist, daß durch die starre hydraulische Rückkopplung die Unabhängigkeit von einer Änderung der Masse der aufgespannten Formhälfte gegeben ist.

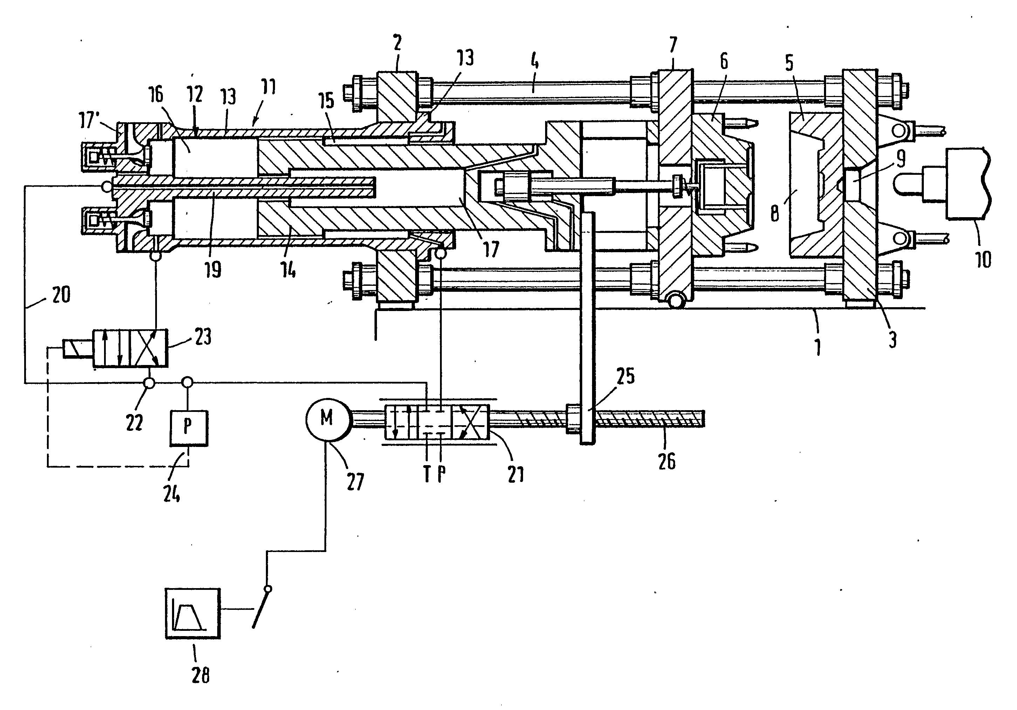

Die Erfindung ist in der Zeichnung anhand eines Ausführungsbeispiels erläutert.

Die Zeichnung zeigt eine Spritzgießmaschine in Seitenansicht, wobei die Schließeinheit im Schnitt dargestellt ist. Die Spritzgießmaschine besteht aus den beiden auf einem Maschinenbett 1 feststehend angeordneten Ständerplatten 2 und 3, die durch vier Holme 4 miteinander verbunden sind. Die Ständerplatte 3 bildet die feststehende Formaufspannplatte, auf die die eine Hälfte 5 einer geteilten Spritzgießform aufgespannt ist, deren andere mit 6 bezeichnete Formhälfte auf der verschiebbaren Formaufspannplatte 7 aufgespannt ist. Im geschlossenen Zustand umschließen die beiden Formhälften in an sich bekannter Weise das Formnest 8 in das über die Angußbohrung 9 mittels des schematisch (im Ausschnitt) dargestellten Spritzaggregats 10 die plastifizierte Masse eingespritzt wird. Die verschiebbare Formaufspannplatte weist auf ihrer von der Form abgewandten Seite die Formschließeinheit 11 auf. Sie weist einen Formzuhaltezylinder 12 auf, dessen Zylinder 13 in der Ständerplatte 2 feststehend angeordnet ist. Sein Kolben 14 ist unter der Ausbildung der Druckräume 15 und 16 beidseitig beaufschlagt. Die Kolbenstange dieses Kolbens ist mit der verschiebbaren Formaufspannplatte verbunden. Sie ist weiterhin unter Bildung des Druckraumes 17 hohl ausgebildet, in den teleskopartig ein rohrartiges Rundprofil 19 eintaucht. Dieses Rundprofil 19 ist fest mit der Stirnplatte 17' des Zylinders 13 verbunden und weist einen Anschluß für eine Druckleitung 20 auf, die mit dem 4/2-Wegeventil 21 verbunden ist, über das ein hydraulisches Arbeitsmittel zu- und abgeführt werden kann. Der Kolben 14, die Kolbenstange und das rohrartige Rundprofil 19 bilden den Fahrzylinder. An dem Abzweig 22 in der Zuflußleitung zwischen dem Anschluß des Fahrzylinders und dem 4/2-Wegeventil ist ein weiteres Wegeventil 23 angeordnet, das mit dem Druckraum 15 des Formschließzylinders verbunden ist. Der Ventilkörper des Wegeventils 21 ist auf einer Spindel 26, die durch das Gehäuse dieses Wegenventils geführt ist, in axialer Richtung der Spindel verschiebbar angeordnet. Die Spindel ist mit dem Schrittmotor 27 gekoppelt, der nach einem vorgegebenen Programm in Abhängigkeit der Geschwindigkeit der verschiebbaren Formaufspannplatte gesteuert ist. Die Werte sind in Abhängigkeit des von der verschiebbaren Formaufspannplatte zurückgelegten Weges gespeichert. Dies ist schematisch durch den Speicher 28 dargestellt. Beim Zufahren der Form wird nach Erreichen eines vorgebbaren Abstandes der verschiebbaren Formaufspannplatte von der feststehend angeordneten Formaufspannplatte durch den Speicher die Schrittzahl des Schrittmotors heraufgesetzt, wodurch automatisch die Schließgeschwindigkeit herabgesetzt wird. Aufgrund der ausgebildeten starren hydraulischen Rückkopplung und aufgrund der extremen Genauigkeit des Schrittmotors wird stets erreicht, daß trotz Holmdehnungen etc. unter Kriechgeschwindigkeit die Form geschlossen wird. Entsprechend wird beim Auffahren der Form die Schrittzahl soweit wie möglich herabgesetzt, so daß der Schrittmotor ein Öffnen der Form unter maximaler Geschwindigkeit gestattet. Hierbei kann auch die Anordnung so getroffen sein, daß der Schrittmotor von dem 4/2-Wegeventil 21 entkoppelt wird, das in an sich bekannter Weise gesteuert wird.

Mit der verschiebbaren Formaufspannplatte ist über die Traverse 25 die Spindel 26 gekoppelt. Zu diesem Zweck weist die Traverse eine nicht dargestellte Spindelmutter auf.

**Patentanspruch**

Formschließeinheit (11) einer Spritzgießmaschine mit mindestens einem hydraulischen Fahrzylinder (14, 19) und mindestens einem hydraulischen Formzuhaltezylinder (12) für die auf Holmen (4) geführte verschiebbare Formaufspannplatte (7) mit einem in der Zuflußleitung (20) zum hydraulischen Fahrzylinder angeordneten Wegeventil (21), das zum Abfahren eines für die verschiebbare Formaufspannplatte vorgebbaren Geschwindigkeitsverlaufs steuerbar ist, dadurch gekennzeichnet, daß der Ventilkörper des 4/2-Wegeventils (21) auf einer Spindel (26) axial verschiebbar angeordnet ist, mit der Spindel ein Schrittmotor (27) gekoppelt ist, der Schrittmotor in Abhängigkeit eines vorgegebenen Geschwindigkeitsverlaufs gesteuert ist und daß nach Erreichen eines vorgegebenen Abstandes zur feststehenden Formaufspannplatte durch die verschiebbare Formaufspannplatte (7) der Schrittmotor auf eine höhere Schrittzahl umschaltbar ist.

**Claim**

Mould-closing unit (11) of an injection moulding machine with at least one hydraulic travelling cylinder (14, 19) and at least one hydraulic mould-closing cylinder (12) for the movable mould-clamping plate (7) guided on rods (4), with a direction valve (21) located in the supply line (20) to the hydraulic travelling cylinder, which direction valve can be controlled for carrying out a predeterminable speed program for the movable mould-clamping plate, characterised in that the valve body of the 4/2-way valve (21) is arranged to be axially slidable on a spindle (26), a stepping motor (27) is connected to the spindle, the stepping motor is controlled depending on a predetermined speed program and that after reaching a predetermined distance from the stationary mould-clamping plate, the stepping motor can be switched to a higher stepping number by the movable mouldclamping plate (7).

**Revendication**

Unité de fermeture de moule (11) d'une machine à mouler par injection avec au moins un vérin hydraulique de déplacement (14, 19) et au moins un vérin hydraulique de verrouillage de moule (12) pour le plateau de fixation de moule mobile (7) guidé sur des longerons (4) et comportant un distributeur (21) placé dans la conduite d'arrivée (20) menant au vérin hydraulique de déplacement, lequel distributeur peut être commandé pour suivre une courbe de vitesse pouvant être prédéterminée pour le plateau de fixation de moule mobile, caractérisée en ce que le corps du distributeur à 4/2 voies (21) est monté sur une broche (26) de façon à pouvoir être déplacé axialement, que la broche est couplée avec un moteur pas à pas (27), que le moteur pas à pas peut être commandé en fonction d'une courbe de vitesse prédéterminée, et que le moteur pas à pas peut être commuté, par le plateau de fixation de moule mobile (7), sur un nombre de pas supérieur dès qu'une distance prédéterminée par rapport au plateau de fixation de moule fixe est atteinte.

EP 0 139 099 B1